# EUROPEAN PATENT SPECIFICATION

(11) **EP 3 838 684 B1**
(45) Date of publication and mention of the grant of the patent: **24.04.2024**
(21) Application number: 19383136.9
(22) Date of filing: 18.12.2019
(51) Int. Cl.: B60R 16/023

(54) **MODULAR SYSTEM FOR INTERCONNECTING VEHICLE SERVICES**
MODULARES SYSTEM ZUM VERBINDEN VON FAHRZEUGDIENSTEN
SYSTÈME MODULAIRE POUR INTERCONNECTER DES SERVICES DE VÉHICULE

(43) Date of publication of application: 23.06.2021
(73) Proprietor: Advanced Automotive Antennas, S.L., 08028 Barcelona (ES)
(72) Inventor: PAREDES VERA, Francisco José, 08232 Viladecavalls (Barcelona) (ES)
(74) Representative: Hoffmann Eitle

(56) References cited:
- EP-A1- 2 866 207
- EP-A1- 3 498 544
- WO-A1-2016/051125
- DE-A1-102007 036 124
- US-A1- 2018 253 919

## Description

### Field and object of the invention

The present invention refers in general to systems for interconnecting different electric and/or electronic service modules in a vehicle.

An object of the invention is to provide an interconnection system that congregate vehicle services at one location inside a vehicle, and that unifies main power supplies and protections at the same location.

An additional object of the invention is to provide a system for interconnecting vehicle services, incorporating an efficient power supply.

### Background of the invention

Typically in a vehicle, power source is required to be appropriately supplied to a large number of services and electric components from a main power source like a battery, which is charged by an alternator.

Vehicles incorporate a plurality of control units for controlling electric devices, such that the control units and the associated device are connected and communicated with each other via wire harness.

There is an increasing demand to incorporate all kinds of technologies and devices available in the consumers markets into a vehicle, like communication systems, display devices etc. However, it is a challenge to integrate all those systems and services in the development phases of current vehicles or during their life cycle.

Currently, all technologies and services in-vehicle are distributed all over a vehicle, and connected between them with large and expensive data busses and wire hardness.

Therefore, the current approach generates a large number of disadvantages, like:
- dissemination of devices all over the vehicle,
- large wire harness to interconnect the different devices routed through the vehicle,
- redundancy of components, like individual and different power supply, control units and electric protections for each service,
- lack of standardization of connections, casing and fixation means.

The above-listed disadvantages of current techniques, increase complexity of assembly process, increase weight and vehicle manufacturing costs.

The U.S. publication US 2018/253919 A1 describes a base control module for vehicles comprising a controller which includes a housing, a programmable processor, on-board memory, and a plurality of inputs and outputs. The module also comprises, a set of pluggable module interfaces each comprising a standardized connector for any of a plurality of interchangeable pluggable modules.

The European patent publication EP-2.866.207 A1 relates to a system and method for authenticating components of a vehicle are described, which involves transmitting an interrogation signal to tags attached to the components of the vehicle from an authentication base station in response to a trigger event, comparing an authentication code received from each of responding tags with an authentication code key at the authentication base station to authenticate the responding tags,

### Summary of the invention

The present invention is defined in the attached independent claim, and it refers to a modular system for interconnecting vehicle services, that bring together vehicle services at one location inside a vehicle, and that unifies main power supplies and protections for most of the services.

Therefore, an aspect of the invention refers to a modular system for interconnecting vehicle services, wherein the system comprises a mother board acting as host module of the system. The mother board comprises: a power connector configured for connecting the mother board to a power source of a vehicle, and a data connector configured for connecting the mother board to a data bus of the vehicle to exchange data with the vehicle.

Additionally, the mother board comprises two or more vehicle service connectors of at least one type, that is, of the same standard ( same dimension and configuration), for connecting different vehicle service modules to the mother board, so that a plurality of vehicle service modules can be connected indistinctly to any of the vehicle service connectors.

Examples of services to which the system of the invention applies are: GNSS possition, V2X communication, Telematic services, WiFi in vehicle, Radio tuner, Remote Key Entry (RKE), emergency call (eCall), among others.

The mother board further comprises a data bus interconnecting the vehicle service connectors. The system further comprises at least one processor adapted to operate as the system controller to identify whether a vehicle service module connected to the mother board is authorized or not to be connected with the mother board, and to register the identity of those services that are authorized to be connected to the mother board and to operate as part of the system. Preferably, the mother board has a processor.

The processor acting as controller is the processor of the mother board, or the processor of a service module, or an external processor.

According to the invention, the system is adapted such that the authorized vehicle services modules connected to the vehicle service connectors, once they have been registered into the system, they can communicate between them directly and independently from the processor (without participation of the processor, that is, the processor does not manage the communication or simply it is turned-off) .

The processor acting as the system controller in order to identify any vehicle services module connected to the mother board, is adapted in a way that if the connected vehicle service module is not authorized to be connected to the mother board, the processor disable power supply to the unauthorized vehicles service module, and to enable power supply to the connected vehicle service module when it is authorized.

The processor is communicated with the data bus of the mother board. The processor is adapted (it is programmed) to register an authorized service connected to the mother board in a way that when a vehicle service module connected to the mother board is authorized, the processor supplies to the data bus identification data related to the identity of an authorized vehicle service module connected to the mother board.

The system may be configured to turn-on the processor only when a vehicle service module is connected to the mother board, and once the processor has completed an identification and registration process to identify a vehicle service module connected to the mother board, the system may be configured to turn-off the processor, thus, the processor would be only operative during the identification and registration process.

Once an authorized vehicle service module have been registered into the system, the registered vehicle services modules can communicate with each other via the data bus of the mother board, while the processor could be turned-off.

In a preferred embodiment, the system includes at least one service module indistinctly connectable with any one of the vehicle service connectors of the mother board. Each of these service modules may have a processor, a communication device, and it has stored an unique identification code that serves to identify each specific service module from the others connected to the mother board. The service modules might be provided with a power supply unit or alternatively can receive power from the mother board.

The controller of the system does not need to be always located in the mother board. For example, the controller function can be carried out by a processor of an authorized service module registered with the mother board. This alternative is preferred for example in case that the computing capacity of the processor of a service module, is enough to use some of its computing capacity to act as "main controller" of the system.

For instance, a Telematic service has a powerful processor to operate himself but it capacity is not used at 100%. In this case, according to the invention the remaining processing capacity may be used to act as a system controller, to identify new services as RKE (Remote Keyless Entry system), and in that case, the processor of the mother board would be disabled.

Therefore, the system is also adapted such that a service processor of an authorized service module when it is connected to the mother board, can act both as a system controller and as service module controller, and to disable the processor of the mother board. Optionally, the mother board has no processor, and a processor of a service module or a processor external to the mother board would act as system controller.

Then, when the service processor acting as controller, can perform the same functions of the mother board controller, that is, the identification and registration processes to authorize and register other services modules connected to the mother board.

In addition, when the system controller could be an external processor adapted to act as system controller to authorize and register other services modules connected to the mother board. In this case, the system is adapted to disable the processor of the mother board, or disable a processor of a service module that is acting as a system controller. Optionally, the mother board has no processor.

The alternative of using an external controller might be preferred for example during the manufacturing process of a vehicle at the time of adding services, or at any other time during the vehicles life to add new services.

When a vehicle manufacturer needs to incorporate new services into the vehicles, it is very convenient to use an external controller to manages the authorization and registration of the added services, and once all the services are connected the external controller is disconnected.

### Brief description of the drawings

Preferred embodiments of the invention are henceforth described with reference to the accompanying drawings, wherein:
Figure 1.- shows a schematic representation of the modular interconnection system of the invention.
Figure 2.- shows a more detailed schematic representation of the modular interconnection system of the invention.
Figure 3.- shows a block diagram of the internal components of service module.
Figure 4.- shows a flow chart illustrating the identification and registration process carried out by the main processor.

### Preferred embodiment of the invention

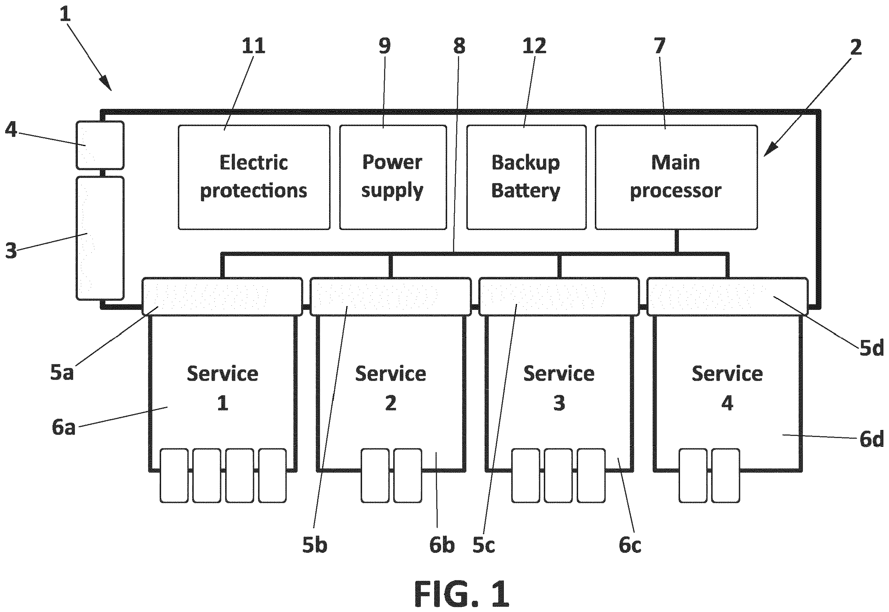

**Figure 1** shows a schematic representation of the modular interconnection system (1) of the invention, that comprises a mother board (2) in turn comprising a power connector (3) configured for connecting the mother board (2) to a power source of a vehicle, and a data connector (4) configured for connecting the mother board (2) to a data bus of the vehicle.

In this example, the mother board (2) additional includes four service connectors (5a,5b,5c,5d) of the same type (same standard, same dimension and configuration), for connecting up to four different vehicle service modules (6a,6b,6c,6d) to the mother board (2), the service modules (6a,6b,6c,6d) having connectors compatible with the service connectors (5a,5b,5c,5d), so that any of the vehicle service modules (6a,6b,6c,6d) can indistinctly be connected to any of the connectors (5a,5b,5c,5d).

The mother board (2) additionally includes a data bus (8) interconnecting all the vehicle service connectors (5a,5b,5c,5d), and a processor (7) adapted to operate as the system controller, and communicated with the data bus (8) as to control the flow of data through it.

In the example shown in **Figure 1****,** the mother board (2) is a Printed Circuit Board (PCB) having a rectangular configuration, and wherein the vehicle services connectors (5a,5b,5c,5d) are mounted at one of the large sides of the PCB, whereas the power connector (3) and the data bus (4) are mounted at a short side of the PCB.

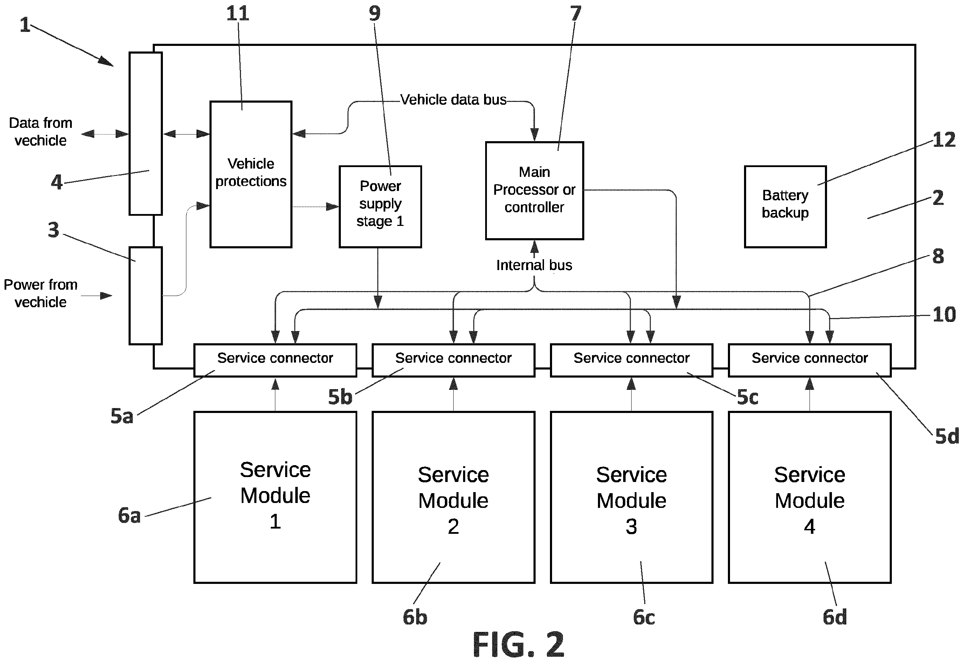

The architecture of the mother board (2) is shown in **Figure 2** in more detail. The mother board (2) has a power supply device (9), connected with the power connector (3) for receiving power from a vehicle, and to convert this power to a suitable power to feed all services modules (6a,6b,6c,6d) connected to the connectors (5a,5b,5c,5d) through an electric conductor (10), thus, all the service modules are fed with the same voltage and current.

The mother board (2) incorporates vehicle electrical protection means (11) connected to the power connector (3) and to the data connector (4), and wherein the power supply device (9) is connected to the power connector (3) through the vehicle protection means (11).

Furthermore, the processor (7) of the mother board (2) is also connected to the data connector (4) through the vehicle protection means (11).

A non-limiting list of protection means that are used in the present invention are: Fuses, Transient Voltage Supresors (TVS), ESD protections and Over Voltage Supressor (MOV).

As shown in **Figure 2****,** the processor (7) is connected and adapted to enable and disable power supply from the power connector (3) to the vehicle services connectors (5a,5b,5c,5d), and also to the service modules (6a,6b,6c,6d) connected thereto.

A backup battery (12) is also provided in the mother board (2) or as external battery connected to the mother board, as to supply power in case of failure of the main power supply from the vehicle.

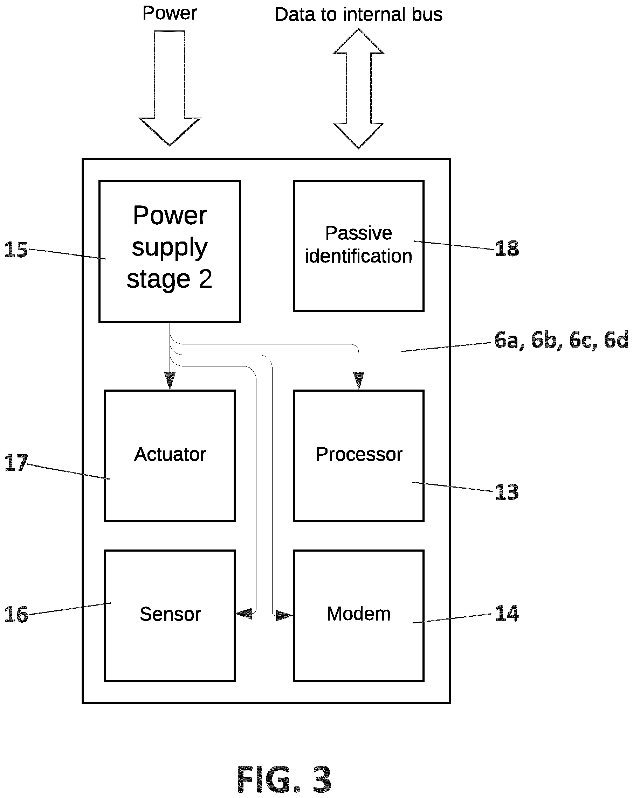

The architecture of each service module (6a,6b,6c,6d) is shown in **Figure 3****,** and may include a service processor (13), a communication device (14) for example a modem, and a power supply unit (15) that would receive power from the mother board (2). Preferably, each service module has stored a unique identification code for its identification when connected to the mother board.

Preferably, each service module (6a,6b,6c,6d) also may have a sensor (16), an actuator (17), and passive identification means (18).

The passive identification means (18) consist of a group of resistors that are connected in parallel with a voltage divisor in the mother board (2), that configure a unique combination and consequently an identification of each particular service module.

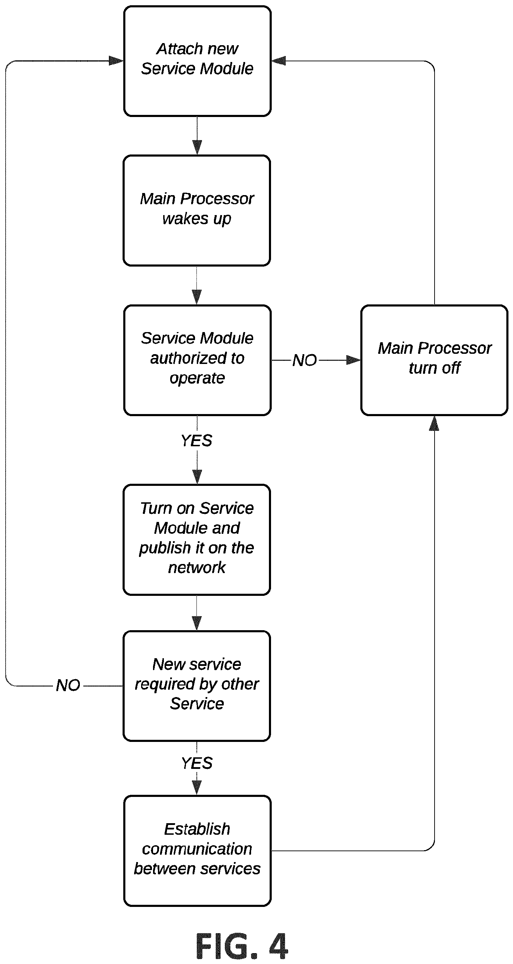

The identification and registration process carried out in the system (1) for identifying and registering service modules connected to the mother board (2), is shown in **Figure 4****.** The process follows this sequence:
1.- when a service module (6a,6b,6c,6d) is physically connected to a connector of the mother board (2), the mother board processor (7) wakes up;
2.- before turning-on the service module, a passive identification is performed as explained above (without the need of receiving power) by the processor of the mother board;
3.- if the connected service module is authorized, the processor of the mother board turns-on the service module,
4.- at the same time, the processor upload data relative to the new service to the other service modules using the data bus,
5.- when the previously registered service modules identify the new data upload, decide whether they are interested or not in the new service, if yes an acknowledge is send to the data bus. If not, the service module do nothing.
6.- the mother board processor may go to sleep (it is turned-off).

For instance, if a service module of Telematics has a service to track and send to an external server the position of the vehicle each minute, when a new GNSS position service is available in the data bus (8), the Telematic service decide that the information of the GNSS position service is useful for their functionality and starts the communication with it. At the same time, GNSS position service isn't useful for the RKE service, so the RKE decide to discard that information.

The system (1) is adapted such that when a vehicle service module connected to the mother board (2) is not authorized to operate in the system, the processor (7) disables power supply to the unauthorized vehicles service module.

The system (1) is adapted to enable power supply to the authorized services, so that once the authorized services have been registered into the system, they can communicate between them directly and independently from the processor, which may be turned-off while no identification and registration process has to be carried out.

Additional features of a preferred implementation of the invention are:
- The controller could upload data relative to the identification of the different Services to the Data bus of the vehicle,
- The main processor could upload data relative to the identification of the different Services to the data bus of the mother board,
- The controller could be added as a first Service (then during the process, is the first stage)
- The controller could modify and filter the Services signals before sending to the Data bus of the vehicle, and viceversa, could modify or filter the data received from the Data bus of the vehicle
- The internal bus could be a ring, star, Daisy chain, etc. topology
- The mother board may have a DC/DC converter to an intermediate voltage (i.e. from 12V, vehicle battery, to a 5V) and if needed each service would convert this standard voltage to its necessity (to make the more powerful conversion in only one place and give to all the services the same voltage to maintain the interchangeability)
- A preferred location in a vehicle to install the entire system is the roof of the vehicle, but trunk and pillars are also preferred.

Other preferred embodiments of the present invention are described in the appended dependent claims and the multiple combinations of those claims.

## Claims

1. A modular system (1) for interconnecting vehicle services, the system comprising:
a mother board (2) in turn comprising:
a power connector (3) configured for connecting the mother board (2) to a power source of a vehicle, and
a data connector (4) configured for connecting the mother board (2) to a data bus of the vehicle,
two or more vehicle service connectors (5a,5b,5c,5d) of the same type, for connecting different vehicle service modules (6a,6b,6c,6d) to the mother board (2),
a data bus (8) interconnecting the vehicle service connectors (5a,5b,5c,5d),
and wherein the system (1) further comprises at least one processor (7) adapted to operate as the system controller to identify whether a vehicle service module (6a,6b,6c,6d) connected to the mother board (2) is authorized or not to be connected with the mother board (2), and to register the identity of an authorized vehicle services module (6a,6b,6c,6d) connected to the mother board (2), and
wherein the system (1) is adapted such that the data bus (8) acts as a direct and independent from the processor (7) communication means for the vehicle services modules, when the authorized services modules (6a,6b,6c,6d) are connected to the vehicle service connectors (5a,5b,5c,5d) and when they have been registered into the system, and
wherein the processor (7) acting as the system controller, is adapted in a way that if a connected vehicle service module (6a,6b,6c,6d) is not authorized to be connected to the mother board (2), the processor (7) disables power supply to the unauthorized vehicles service module (6a,6b,6c,6d), and to enable power supply to the connected vehicle service modules (6a,6b,6c,6d) that are authorized.

2. System according to claim 1, wherein the processor (7) is connected and adapted to enable and unable power supply from the power connector (3) to the vehicle services connectors (5a,5b,5c,5d).

3. System according to any of the preceding claims, wherein the processor (7) is communicated with the data bus (8), and wherein the processor (7) in order to register an authorized service connected to the mother board (2) is adapted in a way, that when a vehicle service module (6a,6b,6c,6d) connected to the mother board (2) is authorized, the processor (7) supplies to the data bus (8) identification data related to the identity of an authorized vehicle service module (6a,6b,6c,6d) connected to the mother board (2).

4. System according to any of the preceding claims, configured to turn-off the processor (7) after an identification process to identify a vehicle service module (6a,6b,6c,6d), has been completed, and to turn-on the processor (7) when a new vehicle service module (6a,6b,6c,6d) is connected to the mother board (2), so the processor (7) is only operative during the identification process.

5. System according to any of the preceding claims, configured in a way that once the authorized vehicle service module (6a,6b,6c,6d) connected to the mother board (2) have been registered, the registered vehicle services modules (6a,6b,6c,6d) can communicate with each other via the data bus (8), independently from the processor (7).

6. System according to any of the preceding claims, further comprising at least one service module (6a,6b,6c,6d) indistinctly connectable with any one of the vehicle service connectors (5a,5b,5c,5d) of the mother board (2), and wherein at least one service module (6a,6b,6c,6d) has at least one of a processor (13), a communication device (14), and a power supply unit (15), and wherein each service module (6a,6b,6c,6d) has stored an unique identification code.

7. System according to claim 6, adapted such that a service processor (13) of an authorized service module (6a,6b,6c,6d) connected to the mother board (2) can act as a system controller and/or as service module controller, the service processor (13) configured to authorize and register other services modules connected to the mother board (2).

8. System according to any claims 6 or 7, adapted to disable the processor (7) of the mother board (2), or disable a service processor (13) acting as a system controller, and to allow an external processor to act as system controller to authorize and register other services modules (6a,6b,6c,6d) connected to the mother board (2).

9. System according to any of the preceding claims, wherein the mother board (2) has a power supply device (9) connected with the power connector (3) for receiving power from a vehicle, and also connected with the vehicle service connectors (5a,5b,5c,5d) for supplying power to a vehicle service module (6a,6b,6c,6d) connected to the mother board (2).

10. System according to claim any of the preceding claims, wherein the mother board (2) incorporates vehicle electrical protection means (11) connected to at least one of the power connector (3) and/or to the data connector (4).

11. System according to claims 9 and 10, wherein the power supply device (9) is connected to the power connector (3) through the vehicle protection means (11).

12. System according to claim 10, wherein the processor (7) of the mother board (2) is connected to the data connector (4) through the vehicle protection means (11).

13. System according to any of the preceding claims, wherein the vehicle service modules (6a,6b,6c,6d) are at least one of the following services: GNSS positioning, V2X communication, Telematic services, WiFi in vehicle, Radio tuner, Remote Key Entry (RKE), and emergency call (eCall).

14. System according to any of the preceding claims, wherein the modular system (1) is also provided with a backup battery (12), the backup battery (12) is provided in the mother board (2) or it is an external battery connected to the mother board (2).

## Patentansprüche

1. Modulares System (1) zum Verbinden von Fahrzeugdiensten, wobei das System Folgendes umfasst:
eine Hauptplatine (2), welche wiederum Folgendes umfasst:
einen Leistungsanschluss (3), welcher dazu ausgebildet ist, die Hauptplatine (2) an eine Leistungsquelle eines Fahrzeugs anzuschließen, und
eine Datenanschluss (4), welcher dazu ausgebildet ist, die Hauptplatine (2) an einen Datenbus des Fahrzeugs anzuschließen,
zwei oder mehr Fahrzeugdiensteanschlüsse (5a, 5b, 5c, 5d) des gleichen Typs, zum Anschließen unterschiedlicher Fahrzeugdienstemodule (6a, 6b, 6c, 6d) an die Hauptplatine (2),
einen Datenbus (8), welcher die Fahrzeugdiensteanschlüsse (5a, 5b, 5c, 5d) verbindet,
und wobei das System (1) zusätzlich mindestens einen Prozessor (7) umfasst, welcher dazu angepasst ist, als Systemsteuerung zu funktionieren, um zu identifizieren, ob ein Fahrzeugdienstemodul (6a, 6b, 6c, 6d), welches an die Hauptplatine (2) angeschlossen ist, zugelassen ist oder nicht, an die Hauptplatine (2) angeschlossen zu werden, und um die Identität eines zugelassenen Fahrzeugdienstemoduls (6a, 6b, 6c, 6d), welches an die Hauptplatine (2) angeschlossen ist, zu registrieren, und
wobei das System (1) so angepasst ist, dass der Datenbus (8) als Kommunikationsmittel für die Fahrzeugdienstemodule, welches direkt und unabhängig vom Prozessor (7) ist, agiert, wenn die zugelassenen Fahrzeugdienstemodule (6a, 6b, 6c, 6d) an die Fahrzeugdiensteanschlüsse (5a, 5b, 5c, 5d) angeschlossen sind und wenn sie in das System registriert worden sind, und
wobei der Prozessor (7), welcher als Systemsteuerung agiert, derart angepasst ist, dass, wenn ein angeschlossenes Fahrzeugdienstemodul (6a, 6b, 6c, 6d) nicht zugelassen ist, an die Hauptplatine (2) angeschlossen zu werden, der Prozessor (7) die Leistungsversorgung zum nicht zugelassenen Fahrzeugdienstemodul (6a, 6b, 6c, 6d) deaktiviert, und die Leistungsversorgung zu den angeschlossenen Fahrzeugdienstemodulen (6a, 6b, 6c, 6d), welche zugelassen sind, aktiviert.

2. System nach Anspruch 1, wobei der Prozessor (7) dazu angeschlossen und angepasst ist, die Leistungsversorgung vom Leistungsanschluss (3) zu den Fahrzeugdiensteanschlüssen (5a, 5b, 5c, 5d) zu aktivieren und zu deaktivieren.

3. System nach einem der vorhergehenden Ansprüche, wobei der Prozessor (7) mit dem Datenbus (8) kommuniziert, und wobei der Prozessor (7), um einen zugelassenen Dienst, welcher an die Hauptplatine (2) angeschlossen ist, zu registrieren, derart angepasst ist, dass, wenn ein Fahrzeugdienstemodul (6a, 6b, 6c, 6d), welches an die Hauptplatine (2) angeschlossen ist, zugelassen ist, der Prozessor (7) dem Datenbus (8) Identifizierungsdaten zuführt, welche die Identität eines zugelassenen Fahrzeugdienstemoduls (6a, 6b, 6c, 6d), welches an die Hauptplatine (2) angeschlossen ist, betreffen.

4. System nach einem der vorhergehenden Ansprüche, welches dazu ausgebildet ist, den Prozessor (7) auszuschalten, nachdem ein Identifizierungsprozess zum Identifizieren eines Fahrzeugdienstemoduls (6a, 6b, 6c, 6d) vervollständigt worden ist, und den Prozessor (7) anzuschalten, wenn ein neues Fahrzeugdienstemodul (6a, 6b, 6c, 6d) an die Hauptplatine (2) angeschlossen wird, sodass der Prozessor (7) nur während des Identifizierungsprozesses betriebsfähig ist.

5. System nach einem der vorhergehenden Ansprüche, welches derart ausgebildet ist, dass, sobald die zugelassenen Fahrzeugdienstemodule (6a, 6b, 6c, 6d), welche an die Hauptplatine (2) angeschlossen sind, registriert worden sind, die registrierten Fahrzeugdienstemodule (6a, 6b, 6c, 6d) über den Datenbus (8), unabhängig vom Prozessor (7), miteinander kommunizieren können.

6. System nach einem der vorhergehenden Ansprüche, zusätzlich umfassend mindestens ein Dienstemodul (6a, 6b, 6c, 6d), welches ohne Unterschied an jeden der Fahrzeugdiensteanschlüsse (5a, 5b, 5c, 5d) der Hauptplatine (2) angeschlossen werden kann, und wobei mindestens ein Dienstemodul (6a, 6b, 6c, 6d) mindestens eines aus einem Prozessor (13), einer Kommunikationsvorrichtung (14) und einer Leistungsversorgungseinheit (15) aufweist, und wobei jedes Dienstemodul (6a, 6b, 6c, 6d) einen einzigartigen Identifizierungscode speichert.

7. System nach Anspruch 6, welches so angepasst ist, dass ein Diensteprozessor (13) eines zugelassenen Dienstemoduls (6a, 6b, 6c, 6d), welches an die Hauptplatine (2) angeschlossen ist, als Systemsteuerung und/oder als Dienstemodulsteuerung agieren kann, wobei der Diensteprozessor (13) dazu ausgebildet ist, andere Dienstemodule, welche an die Hauptplatine (2) angeschlossen sind, zuzulassen und zu registrieren.

8. System nach einem der Ansprüche 6 oder 7, welches dazu angepasst ist, den Prozessor (7) der Hauptplatine (2) zu deaktivieren, oder einen Diensteprozessor (13), welcher als Systemsteuerung agiert, zu deaktivieren, und einem äußeren Prozessor zu erlauben, als Systemsteuerung zu agieren, um andere Dienstemodule (6a, 6b, 6c, 6d), welche an die Hauptplatine (2) angeschlossen sind, zuzulassen und zu registrieren.

9. System nach einem der vorhergehenden Ansprüche, wobei die Hauptplatine (2) eine Leistungsversorgungsvorrichtung (9) aufweist, welche an den Leistungsanschluss (3) angeschlossen ist, um Leistung aus einem Fahrzeug zu empfangen, und auch an die Fahrzeugdiensteanschlüsse (5a, 5b, 5c, 5d) angeschlossen ist, um Leistung zu einem Fahrzeugdienstemodul (6a, 6b, 6c, 6d), welches an die Hauptplatine (2) angeschlossen ist, zuzuführen.

10. System nach einem der vorhergehenden Ansprüche, wobei die Hauptplatine (2) elektrische Fahrzeugschutzmittel (11) beinhaltet, welche an mindestens einen des Leistungsanschlusses (3) und/oder des Datenanschlusses (4) angeschlossen sind.

11. System nach den Ansprüchen 9 und 10, wobei die Leistungsversorgungsvorrichtung (9) an den Leistungsanschluss (3) über die Fahrzeugschutzmittel (11) angeschlossen ist.

12. System nach Anspruch 10, wobei der Prozessor (7) der Hauptplatine (2) an den Datenanschluss (4) über die Fahrzeugschutzmittel (11) angeschlossen ist.

13. System nach einem der vorhergehenden Ansprüche, wobei die Fahrzeugdienstemodule (6a, 6b, 6c, 6d) mindestens eines der folgenden Dienste sind: GNSS-Positionierung, V2X-Kommunikation, Telematikdienste, WLAN im Fahrzeug, Radio-Tuner, Remote Key Entry (RKE) und Notruf (eCall).

14. System nach einem der vorhergehenden Ansprüche, wobei das modulare System (1) auch mit einer Reservebatterie (12) versehen ist, wobei die Reservebatterie (12) in der Hauptplatine (2) bereitgestellt ist oder eine äußere Batterie ist, welche an die Hauptplatine (2) angeschlossen ist.

## Revendications

1. Système modulaire (1) pour interconnecter des services de véhicule, le système comprenant :
une carte mère (2) comprenant à son tour :
un connecteur d'alimentation (3) configuré pour connecter la carte mère (2) à une source d'alimentation d'un véhicule, et
un connecteur de données (4) configuré pour connecter la carte mère (2) à un bus de données du véhicule,
deux ou plus connecteurs de service de véhicule (5a, 5b, 5c, 5d) du même type, pour connecter différents modules de service de véhicule (6a, 6b, 6c, 6d) à la carte mère (2),
un bus de données (8) interconnectant les connecteurs de service de véhicule (5a, 5b, 5c, 5d),
et dans lequel le système (1) comprend en outre au moins un processeur (7) adapté pour fonctionner en tant que contrôleur de système pour identifier si un module de service de véhicule (6a, 6b, 6c, 6d) connecté à la carte mère (2) est autorisé ou non à être connecté avec la carte mère (2), et pour enregistrer l'identité d'un module de service de véhicule autorisé (6a, 6b, 6c, 6d) connecté à la carte mère (2), et
dans lequel le système (1) est adapté de sorte que le bus de données (8) agit comme un moyen de communication direct et indépendant du processeur (7) pour les modules de service de véhicule, lorsque les modules de service autorisés (6a, 6b, 6c, 6d) sont connectés aux connecteurs de service de véhicule (5a, 5b, 5c, 5d) et lorsqu'ils ont été enregistrés dans le système, et
dans lequel le processeur (7), agissant en tant que contrôleur de système, est adapté de telle manière que, si un module de service de véhicule connecté (6a, 6b, 6c, 6d) n'est pas autorisé à être connecté à la carte mère (2), le processeur (7) désactive l'alimentation électrique du module de service de véhicule non autorisé (6a, 6b, 6c, 6d) et pour activer l'alimentation électrique aux modules de service de véhicule connectés (6a, 6b, 6c, 6d) qui sont autorisés.

2. Système selon la revendication 1, dans lequel le processeur (7) est connecté et adapté pour activer et désactiver l'alimentation électrique depuis le connecteur d'alimentation (3) aux connecteurs de service de véhicule (5a, 5b, 5c, 5d).

3. Système selon l'une quelconque des revendications précédentes, dans lequel le processeur (7) est en communication avec le bus de données (8), et dans lequel le processeur (7), afin d'enregistrer un service autorisé connecté à la carte mère (2), est adapté de manière à ce que, lorsqu'un module de service de véhicule (6a, 6b, 6c, 6d) connecté à la carte mère (2) est autorisé, le processeur (7) fournit au bus de données (8) des données d'identification relatives à l'identité d'un module de service de véhicule autorisé (6a, 6b, 6c, 6d) connecté à la carte mère (2).

4. Système selon l'une quelconque des revendications précédentes, configuré pour éteindre le processeur (7) après qu'un processus d'identification pour identifier un module de service de véhicule (6a, 6b, 6c, 6d) a été complété, et pour allumer le processeur (7) lorsqu'un nouveau module de service de véhicule (6a, 6b, 6c, 6d) est connecté à la carte mère (2), de sorte que le processeur (7) fonctionne seulement pendant le processus d'identification.

5. Système selon l'une quelconque des revendications précédentes, configuré de telle manière qu'une fois que le module de service de véhicule autorisé (6a, 6b, 6c, 6d) connecté à la carte mère (2) a été enregistré, les modules de service de véhicule enregistrés (6a, 6b, 6c, 6d) peuvent communiquer entre eux via le bus de données (8), indépendamment du processeur (7).

6. Système selon l'une quelconque des revendications précédentes, comprenant en outre au moins un module de service (6a, 6b, 6c, 6d) indistinctement connectable avec l'un quelconque des connecteurs de service de véhicule (5a, 5b, 5c, 5d) de la carte mère (2), et dans lequel au moins un module de service (6a, 6b, 6c, 6d) a au moins un d'un processeur (13), un dispositif de communication (14), et une unité d'alimentation électrique (15), et dans lequel chaque module de service (6a, 6b, 6c, 6d) a stocké un code d'identification unique.

7. Système selon la revendication 6, adapté de telle sorte qu'un processeur de service (13) d'un module de service autorisé (6a, 6b, 6c, 6d) connecté à la carte mère (2) peut agir en tant que contrôleur de système et/ou en tant que contrôleur de module de service, le processeur de service (13) étant configuré pour autoriser et enregistrer d'autres modules de service connectés à la carte mère (2).

8. Système selon l'une quelconque des revendications 6 ou 7, adapté pour désactiver le processeur (7) de la carte mère (2), ou désactiver un processeur de service (13) agissant en tant que contrôleur de système, et pour permettre à un processeur externe d'agir en tant que contrôleur de système pour autoriser et enregistrer d'autres modules de services (6a, 6b, 6c, 6d) connectés à la carte mère (2).

9. Système selon l'une quelconque des revendications précédentes, dans lequel la carte mère (2) a un dispositif d'alimentation électrique (9) connecté avec le connecteur d'alimentation (3) pour recevoir de l'énergie depuis un véhicule, et aussi connecté avec les connecteurs de service de véhicule (5a, 5b, 5c, 5d) pour fournir de l'énergie à un module de service de véhicule (6a, 6b, 6c, 6d) connecté à la carte mère (2).

10. Système selon l'une quelconque des revendications précédentes, dans lequel la carte mère (2) incorpore des moyens de protection électrique de véhicule (11) connectés à au moins un du connecteur d'alimentation (3) et/ou au connecteur de données (4).

11. Système selon les revendications 9 et 10, dans lequel le dispositif d'alimentation électrique (9) est connecté au connecteur d'alimentation (3) à travers les moyens de protection de véhicule (11).

12. Système selon la revendication 10, dans lequel le processeur (7) de la carte mère (2) est connecté au connecteur de données (4) à travers les moyens de protection de véhicule (11).

13. Système selon l'une quelconque des revendications précédentes, dans lequel les modules de service de véhicule (6a, 6b, 6c, 6d) sont au moins l'un des services suivants : positionnement GNSS, communication V2X, services télématiques, WiFi dans véhicule, tuner radio, accès à distance sans clé (RKE) et appel d'urgence (eCall).

14. Système selon l'une quelconque des revendications précédentes, dans lequel le système modulaire (1) est aussi équipé d'une batterie de secours (12), la batterie de secours (12) est fournie dans la carte mère (2) ou c'est une batterie externe connectée à la carte mère (2).
